# FASCICULE DE BREVET EUROPEEN

(11) **EP 3 724 455 B1**
(45) Date de publication et mention de la délivrance du brevet: **28.06.2023**
(21) Numéro de dépôt: 18836279.2
(22) Date de dépôt: 14.12.2018
(51) Int. Cl.: F01D 5/22, F01D 5/26, F01D 5/10, F04D 29/32, F04D 29/66

(54) **DISPOSITIF AMORTISSEUR**
DÄMPFUNGSVORRICHTUNG
DAMPING DEVICE

(30) Priorité: 14.12.2017 FR 1762170
(43) Date de publication de la demande: 21.10.2020
(73) Titulaire: SAFRAN AIRCRAFT ENGINES, 75015 Paris (FR)
(72) Inventeur: JOLY, Philippe, Gérard, Edmond, 77550 Moissy-Cramayel Cedex (FR); COMIN, François, Jean, 77550 Moissy-Cramayel Cedex (FR); DOUGUET, Charles, Jean-Pierre, 77550 Moissy-Cramayel Cedex (FR); JABLONSKI, Laurent, 77550 Moissy-Cramayel Cedex (FR); LAGARDE, Romain, Nicolas, 77550 Moissy-Cramayel Cedex (FR); PERROLLAZ, Jean Marc, Claude, 77550 Moissy-Cramayel Cedex (FR)
(74) Mandataire: Regimbeau
(86) Numéro de dépôt international: PCT/FR2018/053302
(87) Numéro de publication internationale: WO 2019/115977

(56) Documents cités:
- EP-A1- 1 985 810
- CN-U- 204 941 612
- FR-A1- 2 345 605
- FR-A1- 2 923 557
- FR-A1- 2 988 427
- US-A- 4 723 889
- US-A- 5 205 713
- US-A- 5 820 346

## Description

### DOMAINE TECHNIQUE

L'invention concerne un ensemble comprenant un module rotor de turbomachine.

L'invention vise plus spécifiquement un ensemble pour turbomachine comprenant deux modules rotor et un dispositif amortisseur.

### ETAT DE LA TECHNIQUE

Un module rotor de turbomachine comprend généralement un ou plusieurs étage(s), chaque étage comprenant un disque centré sur un axe longitudinal de turbomachine, correspondant à l'axe de rotation du module rotor. La mise en rotation du disque est généralement assurée par un arbre rotatif auquel il est relié solidairement, par exemple au moyen d'un tourillon de module rotor, l'arbre rotatif s'étendant selon l'axe longitudinal de la turbomachine. Des aubes sont montées à la périphérie externe du disque, et réparties circonférentiellement, de manière régulière autour de l'axe longitudinal. Chaque aube s'étend depuis le disque, et comprend en outre une pale, une plateforme, une échasse et un pied. Le pied est encastré dans un logement du disque configuré à cet effet, la pale est balayée par un flux traversant la turbomachine, et la plateforme forme une portion de la surface interne de la veine de flux.

Le domaine de fonctionnement d'un module rotor est limité, notamment à cause de phénomènes aéroélastiques. Les modules rotor de turbomachines modernes, qui possèdent une charge aérodynamique élevée, et un nombre réduit d'aubes, sont plus sensibles à ce type de phénomènes. En particulier, ils présentent des marges réduites entre les zones de fonctionnement sans instabilité et les zones instables. Il est néanmoins impératif de garantir une marge suffisante entre le domaine de stabilité et celui de l'instabilité, ou de démontrer que le module rotor peut fonctionner dans la zone d'instabilité sans dépasser sa limite d'endurance. Ceci permet de garantir un fonctionnement sans risque dans toute la vie et tout le domaine de fonctionnement de la turbomachine.

Le fonctionnement dans la zone d'instabilité se caractérise par un couplage entre le fluide et la structure, le fluide apportant l'énergie à la structure, et la structure répondant sur ses modes propres à des niveaux pouvant dépasser la limite d'endurance du matériau constituant l'aube. Ceci génère des instabilités vibratoires qui accélère l'usure du module rotor, et diminue sa durée de vie.

Afin de limiter ces phénomènes, il est connu de mettre en place un système amortissant la réponse dynamique de l'aube, afin de garantir que celle-ci ne dépasse pas la limite d'endurance du matériau quel que soit le point de fonctionnement du module rotor. Cependant, la plupart des systèmes connus de l'art antérieur s'attachent à amortir des modes de vibration à déphasage non nul, et caractérisant une réponse asynchrone des aubes aux sollicitations aérodynamiques. De tels systèmes ont par exemple été décrits dans les documents FR 2 949 142, EP 1 985 810 et FR 2 923 557, au nom de la Demanderesse. Ces systèmes sont tous configurés pour être logés entre la plateforme et le pied de chaque aube, dans le logement délimité par les échasses respectives de deux aubes successives. Par ailleurs, de tels systèmes fonctionnent lorsque deux plateformes d'aubes successives se déplacent l'une par rapport à l'autre, par dissipation de l'énergie de vibration, par exemple par frottement. L'état de la technique comprend aussi le document CN 204 941 612 U.

Cependant, ces systèmes sont totalement inefficaces pour amortir les modes de vibration présentant un déphasage nul faisant participer les aubes et la ligne rotor, c'est-à-dire son arbre rotatif. De tels modes se caractérisent par une flexion des aubes de rotor avec un déphasage inter-aube nul impliquant un moment non nul sur l'arbre rotatif. En outre, il s'agit d'un mode couplé entre l'aube, le disque, et l'arbre rotatif. Plus précisément, la torsion au sein du module rotor, résultant par exemple d'efforts inverses entre un rotor de turbine et un rotor de compresseur, aboutissent à des mouvements de flexion des aubes par rapport à leur attache avec le disque. Ces mouvements sont d'autant importants que l'aube est grande, et que l'attache est souple.

Il existe donc un besoin d'un système amortisseur pour rotor de turbomachine permettant de limiter les instabilités générées par tous les modes de vibration tels que précédemment décrits.

### RESUME DE L'INVENTION

Un but de l'invention est d'amortir les modes de vibration présentant un déphasage nul pour tous types de modules rotor de turbomachine.

Un autre but de l'invention est d'influencer l'amortissement des modes de vibration à déphasage non nul, pour tous types de modules rotor de turbomachine.

Un autre but de l'invention est de proposer une solution d'amortissement simple et facile à mettre en oeuvre.

L'invention propose notamment un ensemble pour turbomachine selon la revendication 1 comprenant :
- un premier module rotor comprenant une première aube,
- un deuxième module rotor, relié au premier module rotor, et comprenant une deuxième aube de longueur inférieure à la première aube, et
- un dispositif amortisseur comprenant une première surface radiale externe en appui avec frottement contre le premier module ainsi qu'une deuxième surface radiale externe en appui avec frottement contre le deuxième module, de sorte à coupler les modules en vue d'amortir leurs mouvements vibratoires respectifs en fonctionnement.

Le couplage mécanique entre le premier et le deuxième module rotor permet d'augmenter la rigidité tangentielle de la liaison entre ces deux rotors, tout en autorisant une certaine souplesse axiale et radiale du dispositif amortisseur afin de maximiser le contact entre les différents éléments de l'ensemble. Ceci permet de limiter les instabilités liées au mode de vibration à déphasage nul, mais aussi de participer à l'amortissement des modes de vibration à déphasage non nul. En outre, un tel ensemble présente l'avantage d'une intégration facile au sein de turbomachines existantes, que ce soit lors de la fabrication ou lors de maintenance.

De plus, le premier module rotor comprend un disque centré sur un axe longitudinal de turbomachine, la première aube étant montée à la périphérie externe du disque duquel elle s'étend, et comprenant en outre une pale, une plateforme, une échasse et un pied encastré dans un logement du disque, et le deuxième module comprend une virole comprenant une extension circonférentielle s'étendant vers la plateforme de la première aube, la première surface radiale externe du dispositif amortisseur étant en appui avec frottement sur une surface interne de la plateforme de la première aube, la deuxième surface radiale externe du dispositif amortisseur étant en appui contre l'extension circonférentielle de la virole du deuxième module rotor. Le dispositif amortisseur comprend aussi deux épaulements de part et d'autre d'une échancrure ménagée au niveau de la surface interne du dispositif amortisseur, les épaulements étant en appui contre l'échasse.

L'ensemble selon l'invention peut en outre comprendre les caractéristiques suivantes telles que définies dans les revendications dépendantes :
- le dispositif amortisseur comprend une première plaquette sacrificielle logée au niveau de la première et de la deuxième surface radiale externe, la première plaquette étant configurée pour garantir l'appui desdites surfaces radiales externes,
- la première plaquette comprend un revêtement configuré pour diminuer le frottement entre ladite plaquette et les modules rotor,
- la première plaquette comprend un revêtement de type viscoélastique,
- le dispositif amortisseur comprend des alésages configurés pour alléger la masse du dispositif amortisseur,
- le dispositif amortisseur comprend des inserts, par exemple de type métallique, configurés pour alourdir le dispositif amortisseur,
- les épaulements sont en appui contre la virole,
- les épaulements s'étendent en outre de part et d'autre de l'échasse dans une direction circonférentielle,
- il comprend en outre une patte de fixation reliée d'une part au dispositif amortisseur, et d'autre part à la liaison entre le premier et le deuxième module rotor, de sorte à assurer l'anti rotation, ainsi que l'arrêt axial et radial du dispositif amortisseur,
- la patte de fixation comprend une deuxième plaquette sacrificielle logée au niveau de la surface externe de la patte de fixation, la deuxième plaquette étant configurée pour augmenter la raideur tangentielle du dispositif amortisseur,
- la patte de fixation est reliée au dispositif amortisseur au niveau de l'échancrure,
- l'échancrure comprend une troisième plaquette sacrificielle sur laquelle la patte de fixation est en appui, et
- le premier module est une soufflante, et le deuxième module est un compresseur, par exemple un compresseur basse pression.

L'invention porte également sur une turbomachine comprenant un ensemble tel que précédemment décrit.

### DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :
- la figure 1 est une vue en coupe schématique d'un exemple de réalisation de l'ensemble en dehors de la portée des revendications,
- la figure 2 est une vue de face d'un module rotor soumis à des vibrations tangentielles dont le mode est à déphasage nul,
- la figure 3a illustre schématiquement des déplacements tangentiels de modules rotors de turbomachine, en fonction de la position desdits modules le long d'un axe de turbomachine,
- la figure 3b est un agrandissement en perspective schématique de l'interface entre deux modules rotor de turbomachine illustrant ses déplacements tangentiels relatifs desdits modules rotor,
- la figure 4a illustre schématiquement un premier exemple de réalisation d'un dispositif amortisseur selon l'invention,
- la figure 4b illustre schématiquement un deuxième exemple de réalisation d'un dispositif amortisseur selon l'invention,
- la figure 4c illustre schématiquement un troisième exemple de réalisation d'un dispositif amortisseur selon l'invention,
- la figure 5a illustre schématiquement un quatrième exemple de réalisation d'un dispositif amortisseur selon l'invention, et
- la figure 5b illustre schématiquement un cinquième exemple de réalisation d'un dispositif amortisseur selon l'invention.

### DESCRIPTION DETAILLEE DE L'INVENTION

Un exemple de réalisation d'un ensemble 1 selon l'invention va maintenant être décrit, en référence aux figures.

Dans tout ce qui va suivre, l'amont et l'aval sont définis par rapport au sens d'écoulement normal d'air à travers la turbomachine. Par ailleurs, un axe longitudinal X-X de turbomachine est défini. De cette manière, la direction axiale correspond à la direction de l'axe longitudinal X-X de turbomachine, une direction radiale est une direction qui est perpendiculaire à cet axe longitudinal X-X de turbomachine et qui passe par ledit axe longitudinal X-X de turbomachine, et une direction circonférentielle correspond à la direction d'une ligne courbe plane et fermée, dont tous les points se trouvent à égale distance de l'axe longitudinal X-X de turbomachine. Enfin, et sauf précision contraire, les termes « interne (ou intérieur) » et « externe (ou extérieur) », respectivement, sont utilisés en référence à une direction radiale de sorte que la partie ou la face interne (i.e. radialement interne) d'un élément est plus proche de l'axe longitudinal X-X de turbomachine que la partie ou la face externe (i.e. radialement externe) du même élément.

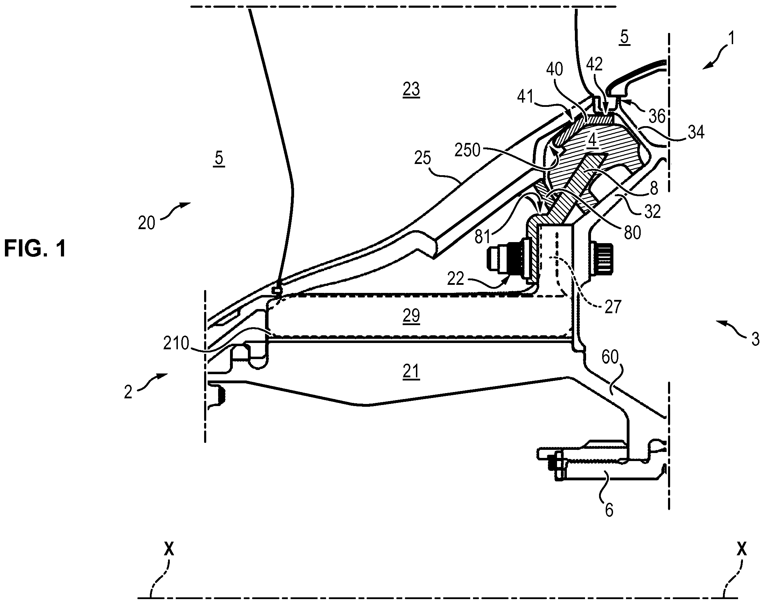

En référence aux figures 1, 3a et 5a, un tel ensemble 1 comprend :
- un premier module rotor 2 comprenant une première aube 20,
- un deuxième module rotor 3, relié au premier module rotor 2, et comprenant une deuxième aube 30 de longueur inférieure à la première aube 20, et
- un dispositif amortisseur 4 comprenant une première surface radiale externe 41 en appui avec frottement contre le premier module 2 ainsi qu'une deuxième surface radiale externe 42 en appui avec frottement contre le deuxième module 3, de sorte à coupler les modules 2, 3 en vue d'amortir leurs mouvements vibratoires respectifs en fonctionnement.

Par appui « avec frottement », on comprend que le contact entre les surfaces radiales externes 41, 42 et, respectivement, le premier module rotor 2, et le deuxième module rotor 3, s'effectue avec frottement. En d'autres termes, les efforts d'appui entre les surfaces radiales externes 41, 42 et, respectivement, le premier module rotor 2, et le deuxième module rotor 3, peuvent se décomposer en des efforts de pression, qui sont dirigés normalement au contact, et des efforts de frottement, dirigés tangentiellement au contact. Cet appui garantit à la fois la cohérence mécanique de l'ensemble 1, par l'intermédiaire des efforts de pression, mais aussi le couplage entre les modules 2, 3, en vue d'amortir leurs mouvements vibratoires respectifs en fonctionnement, par l'intermédiaire des efforts de frottement.

En outre, comme visible sur les figures 1, 3a et 5a, la première surface radiale externe 41 s'étend selon un plan sensiblement parallèle au plan dans lequel s'étend la deuxième surface radiale externe 42. En d'autres termes, ces deux plans sont inclinés l'un par rapport à l'autre d'un angle proche de 180°, par exemple compris entre 165° et 195°.

En référence aux figures 1, 3a et 5a, le premier module rotor est une soufflante 2, et le deuxième module rotor est un compresseur basse pression 3, situé immédiatement en aval de la soufflante 2.

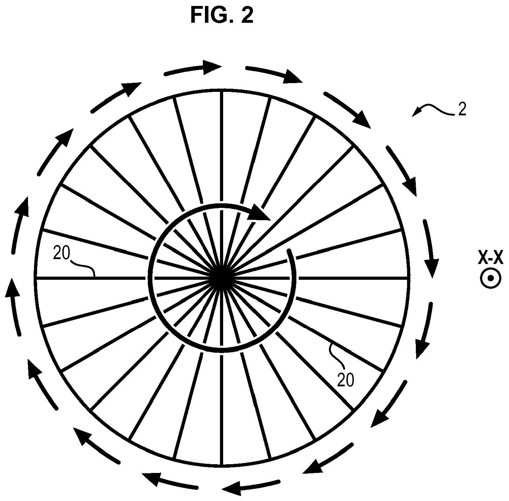

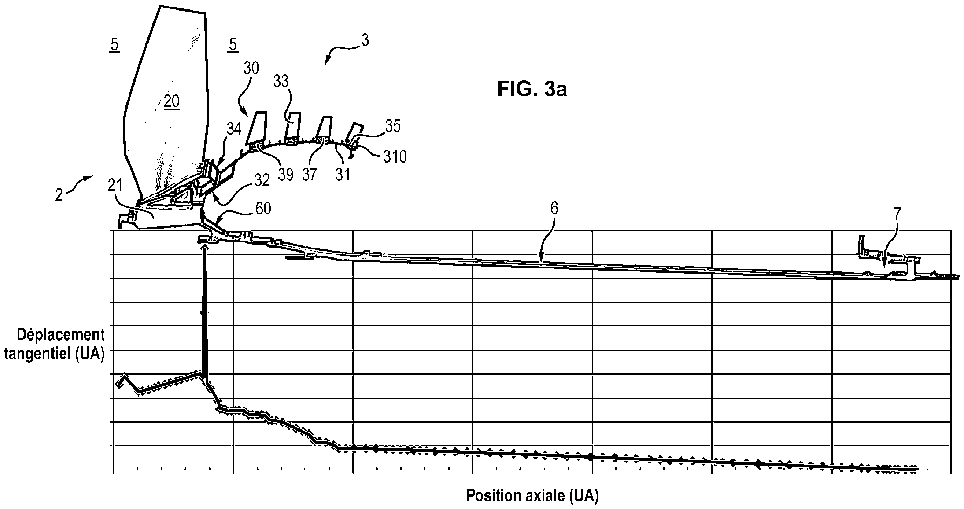

La soufflante 2 et le compresseur basse pression 3 comprennent un disque 21, 31 centré sur l'axe longitudinal X-X de turbomachine, la première 20 et la seconde aube 30 étant respectivement montées à la périphérie externe du disque 21, 31, et comprenant en outre une pale 23, 33, une plateforme 25, 35 une échasse 27, 37 et un pied 29, 39 encastré dans un logement 210, 310 du disque 21, 31. La distance séparant le pied 29, 39 de l'extrémité de la pale 23, 33 constitue les longueurs respectives de la première 20 et de la deuxième aube 30. La longueur de la première aube 20 et deuxième aube 30 est donc ici considérée comme sensiblement radialement par rapport à l'axe longitudinal X-X de rotation des modules rotor 2, 3. En fonctionnement, la pale 23, 33 est balayée par un flux 5 traversant la turbomachine, et la plateforme 25, 35 forme une portion de la surface interne de la veine de flux 5. De manière générale, comme visible sur les figures 2, 3a, 5a, et 5b, soufflante 2 et compresseur basse pression 3 comprennent une pluralité d'aubes 20, 30 réparties circonférentiellement autour de l'axe longitudinal X-X. Le compresseur basse pression 3 comprend en outre une virole annulaire 32 également centrée sur l'axe longitudinal X-X. La virole 32 comprend une extension circonférentielle 34, elle aussi annulaire, s'étendant vers la plateforme 25 de la première aube 20. Cette extension annulaire 34 est porteuse de léchettes radiales d'étanchéité 36 configurées pour prévenir les pertes de débit d'air depuis la veine de flux 5. De plus, la virole 32 est fixée au disque 21 de soufflante 2 au moyen d'attaches 22 réparties circonférentiellement autour de l'axe longitudinal X-X. De telles attaches peuvent par exemple être des liaisons boulonnées 22. Alternativement, de telles attaches 22 peuvent être réalisées par frettage auquel est associé un dispositif d'anti-rotation et/ou un système de verrouillage axial. Enfin, en référence à la figure 3a, l'ensemble formé de la soufflante 2 et du compresseur 3 est mis en rotation par un arbre rotatif 6, appelé arbre basse pression, auquel soufflante 2 et compresseur basse pression 3 sont solidairement reliés, au moyen d'un tourillon de rotor 60, l'arbre basse pression 6 étant également relié à une turbine basse pression 7, en aval de la turbomachine, et s'étendant selon l'axe longitudinal X-X de turbomachine.

En fonctionnement, la soufflante 2 aspire de l'air dont tout ou partie est compressé par le compresseur basse pression 3. L'air compressé circule ensuite dans un compresseur haute pression (non représenté) avant d'être mélangé à du carburant, puis enflammé au sein de la chambre de combustion (non représentée), pour enfin être successivement détendu dans la turbine haute (non représentée) et la turbine basse pression 7. Les efforts opposés de compression en amont, et de détente en aval, donnent lieu à des phénomènes aéroélastiques de flottement, qui couplent les efforts aérodynamiques sur les aubes 20, 30, et les mouvements de vibration en flexion et torsion dans les aubes 20, 30. Comme illustré en figure 2, Ce flottement entraîne notamment des efforts de torsion intenses au sein de l'arbre basse pression 6 qui sont répercutés à la soufflante 2 et au compresseur basse pression 3. Les aubes 20, 30 sont alors soumises à des battements tangentiels, notamment selon un mode de vibration à déphasage nul. Il s'agit en effet d'un mode de flexion avec un déphasage inter-aube 20, 30 nul, impliquant un moment non nul sur l'arbre basse pression 6, dont la fréquence propre est environ une fois et demie supérieure à celle de première harmonique de vibration, et dont la déformée possède une ligne nodale à mi-hauteur de l'aube 20, 30. De telles vibrations limitent la tenue mécanique de la soufflante 2 et du compresseur basse pression 3, accélèrent l'usure de la turbomachine, et diminue sa durée de vie.

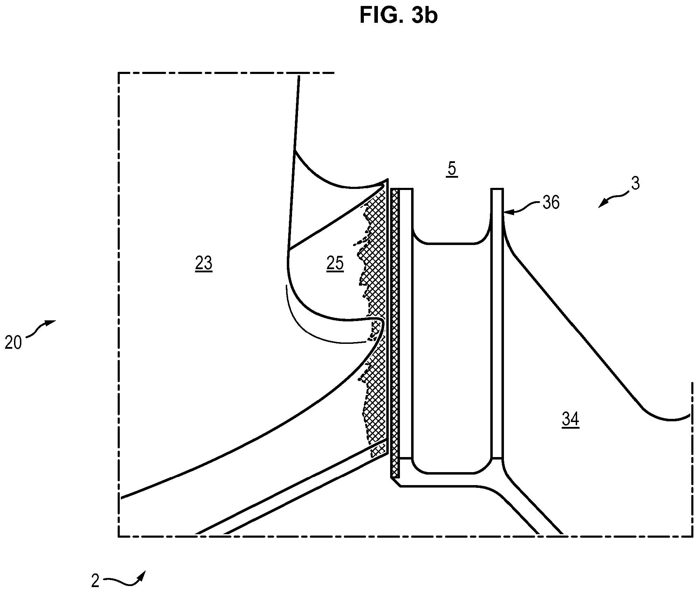

Comme visible sur la figure 3a, le déplacement tangentiel par flottement de l'aube 20 de soufflante 2 est différent de celui de la virole 32 de compresseur basse pression 3. En effet, la longueur des aubes 20 de soufflante 2 étant supérieure à celle des aubes 30 de compresseur basse pression 3, le moment de flexion tangentielle entraîné par les battements d'une aube 20 de soufflante 2 est bien supérieur à celui entraîné par les battements d'une aube 30 de compresseur basse pression 3. En outre, la raideur de montage au sein la de soufflante 2 est différente de celle de montage au sein du compresseur 3. En référence à la figure 3b, cet écart de battements tangentiels est notamment visible à l'interface entre la plateforme 25 d'une aube 20 de soufflante 2, et des léchettes d'étanchéité 36 de virole 32.

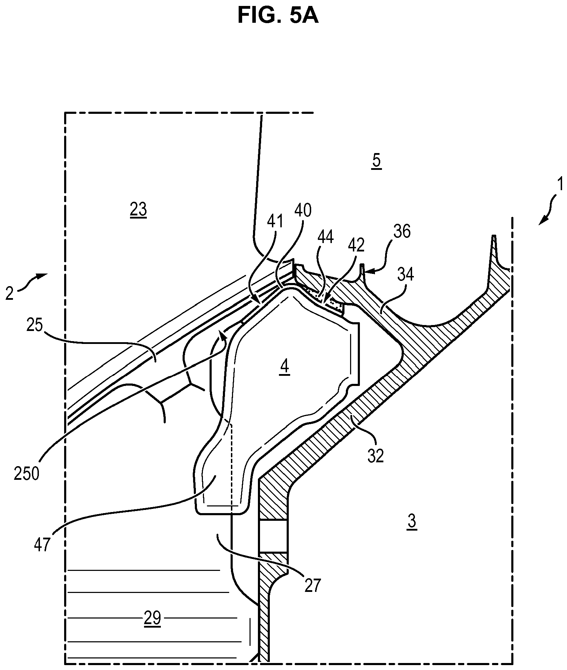

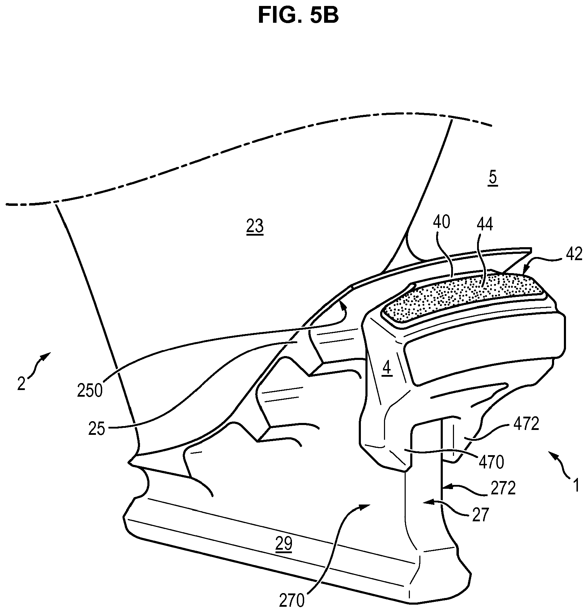

Dans un premier mode de réalisation illustré sur les figures 1, 5a et 5b, le dispositif amortisseur 4 est logé sous la plateforme 25 d'une aube 20 de soufflante 20, entre l'échasse 27 et la virole 32 de compresseur basse pression 3. Toutes ou partie des aubes 20 de soufflante 2 peuvent être équipées d'un tel dispositif amortisseur 4, suivant l'amortissement recherché, mais aussi les temps caractéristiques de maintenance acceptables.

La première surface radiale externe 41 est en appui avec frottement contre la soufflante 2 au niveau de la surface interne 250 de la plateforme 25 de l'aube 20 de soufflante 2, et la deuxième surface radiale externe 42 est en appui avec frottement contre l'extension circonférentielle 34 de la virole 32. Ceci assure un couplage tangentiel de raideur importante entre soufflante 2 et compresseur basse pression 3, de sorte à réduire les vibrations tangentielles précédemment décrites. Le couplage est d'ailleurs d'autant important que la zone au sein de laquelle le dispositif amortisseur 4 est disposé présente les déplacements tangentiels relatifs les plus élevés pour le mode à déphasage nul considéré, comme illustré en figures 3a et 3b. Typiquement, ces déplacements relatifs sont de l'ordre de quelques millimètres. Pour autant, le dispositif amortisseur 4 conserve également avantageusement une efficacité sur les modes vibratoires des aubes 20 de soufflante 2 à déphasage non nul.

Dans un deuxième mode de réalisation, toujours en référence à la figure 1, l'ensemble 1 comprend une patte de fixation 8 reliée d'une part au dispositif amortisseur 4, et d'autre part à la liaison entre la soufflante 2 et le compresseur basse pression 3, de sorte à assurer l'anti rotation, ainsi que l'arrêt axial et radial du dispositif amortisseur 4. Compte-tenu des sollicitations mécaniques déjà décrites, il est en effet nécessaire d'assurer la stabilité, notamment axiale et radiale, du dispositif amortisseur 4 au sein de l'ensemble 1 en fonctionnement.

Avantageusement, la patte de fixation 8 est fixée à la liaison entre soufflante 2 et compresseur basse pression 3 au niveau de la liaison boulonnée 22 entre disque 21 et virole 32.

La patte de fixation 8 peut en outre être intercalée entre deux dispositifs amortisseurs 4 circonférentiellement adjacents, et fixée à ces-derniers, par exemple par vissage. Alternativement, la patte de fixation 8 peut être fixée aux dispositifs amortisseurs 4 par tout autre moyen de fixation connu de l'homme du métier.

L'ensemble 1 peut également comprendre deux pattes de fixation 8, fixées de chaque côté du dispositif amortisseur 4, par exemple par vissage. Alternativement, les pattes de fixation 8 peuvent être fixées aux dispositifs amortisseurs 4 par tout autre moyen de fixation connu de l'homme du métier.

La patte de fixation 8 pouvant s'avérer trop souple tangentiellement, l'ensemble 1 peut en outre comprendre une deuxième plaquette sacrificielle 80 logée au niveau de la surface externe 81 de la patte de fixation 8, la deuxième plaquette 80 étant configurée pour augmenter la raideur tangentielle du dispositif amortisseur 4. La deuxième plaquette sacrificielle 80 présente en outre les mêmes caractéristiques que la première plaquette sacrificielle 40, notamment en ce qui concerne la composition, la lubrification et les revêtements additionnels.

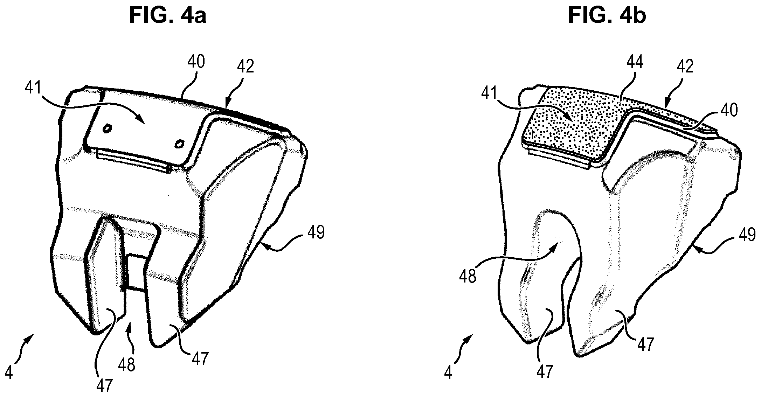

Dans un troisième mode de réalisation illustré sur les figures 4a à 4c, 5a et 5b, le dispositif amortisseur 4 comprend une première plaquette sacrificielle 40 logée au niveau de la première 41 et la deuxième 42 surface d'appui. Cette première plaquette 40 est configurée pour garantir l'appui des surfaces radiales externes 41, 42 du dispositif amortisseur 4 sur la soufflante 2 et le compresseur basse pression 3. En effet, les sollicitations mécaniques en fonctionnement sont telles que de légers mouvements tangentiels, axiaux et radiaux du dispositif amortisseur 4 sont à prévoir. Ces mouvements sont notamment dus aux battements tangentiels à amortir, mais aussi au chargement centrifuge de l'ensemble 1. Il est nécessaire que ces mouvements n'usent pas les aubes 20 ou la virole 32, dont les revêtements sont relativement fragiles. A cet égard, la première plaquette sacrificielle 40 comprend un matériau anti usure, par exemple de type téflon, un métal tel que du titane, ou tout matériau composite spécifique connu de l'homme du métier. En outre, la première plaquette sacrificielle 40 peut être traitée par lubrification sèche, en vue de pérenniser la valeur du coefficient de frottement entre dispositif amortisseur 4 et virole 32 et/ou plateforme 25 d'aube 2. Ce matériau à propriétés de lubrification est par exemple de type MoS2. Avantageusement, comme visible sur les figures 4a à 4c, 5a et 5c, la première plaquette sacrificielle 40 présente une forme de « V ».

En vue d'améliorer l'appui du dispositif amortisseur 4, la première plaquette sacrificielle 40 peut également comprendre un revêtement additionnel 44, comme visible sur les figure 4b, 5a et 5b. De manière générale, un tel revêtement 44 est configuré pour diminuer le frottement et/ou l'usure des pièces moteur entre la première plaquette 40 et les modules rotor 2, 3.
Ce revêtement 44 est par exemple de type viscoélastique. Un tel revêtement 44 comprend alors avantageusement un matériau ayant des propriétés similaires à celles d'un matériau tel que ceux de la gamme ayant l'appellation commerciale « SMACTANEO », par exemple un matériau de type « SMACTANE^{®} 70 ». Une autre manière d'augmenter la raideur tangentielle de l'ensemble 1 est de suffisamment précontraindre le revêtement viscoélastique 44 pour que le déplacement tangentiel relatif entre aube 20 et virole 32 se transforme en cisaillement viscoélastique du revêtement 44 seul.
Alternativement, ce revêtement 44 est de type dissipatif et/ou viscoélastique et/ou amortissant. Le revêtement dissipatif 44 comprend alors un matériau choisi parmi ceux présentant des propriétés mécaniques similaires à celles du vespel, du téflon ou de toute autre matière à propriétés lubrifiantes. De manière plus générale le matériau possède un coefficient de frottement compris entre 0.3 et 0.07. Une trop grande souplesse ne permettrait pas d'amortir le mode à déphasage nul, puisque les déplacements relatifs de la soufflante 2 et du compresseur basse pression 3 aboutiraient à des frottements et/ou oscillations entre un état « collé » et un état « glissant » du dispositif amortisseur 4.
Ces revêtements additionnels 44 sont rapportés par collage sur la première plaquette sacrificielle 40.

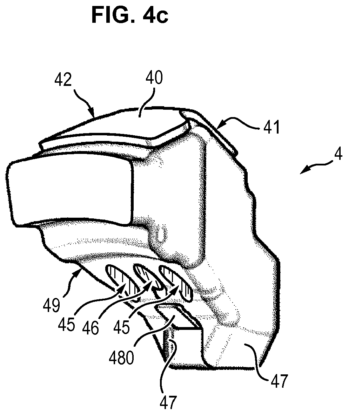

Dans un quatrième mode de réalisation illustré sur la figure 4c, l'amortissement par couplage tangentielle peut être ajusté en contrôlant la masse du dispositif amortisseur 4, ce qui influence l'inertie en cisaillement. Ce contrôle passe par des modifications de la masse du dispositif amortisseur 4. Cette masse peut être modifiée dans tout ou partie du dispositif amortisseur 4, typiquement en pratiquant des alésages 45 pour alléger, et/ou en ajoutant un ou plusieurs inserts 46, par exemple métalliques, pour alourdir.

Avantageusement, la combinaison du deuxième et du troisième mode de réalisation permet d'ajuster les efforts de contact entre le dispositif amortisseur 4 et la soufflante 2 ainsi que le compresseur basse pression 3. En effet, des efforts de contact trop élevés entre l'aube 20 de soufflante 2 et le dispositif amortisseur 4 limiteraient les dissipations des vibrations en fonctionnement.

Dans un cinquième mode de réalisation illustré sur les figures 4a à 4c, 5a et 5b, le dispositif amortisseur 4 comprend deux épaulements 47 de part et d'autre d'une échancrure 48 ménagée au niveau de la surface interne 49 du dispositif amortisseur 4, les épaulements 47 étant en appui, selon l'invention, contre l'échasse 27, comme visible sur la figure 5a. Avantageusement, comme visible plus précisément sur la figure 5b, les épaulements 470, 472 s'étendent, en outre, de part et d'autre de l'échasse 27 dans une direction circonférentielle, en aval de l'échasse 27. En d'autres termes, dans ce cas, un premier épaulement 470 s'étend le long d'un premier côté 270 de l'échasse 27, en aval de l'échasse 27, et un deuxième épaulement 472 s'étend le long d'un second côté 272 de l'échasse 27, opposé au premier côté 270 de l'échasse 27 dans une direction circonférentielle, également en aval de l'échasse 27. L'appui interne du dispositif amortisseur 4 sur la virole 32 garantit notamment une stabilité radiale. L'appui interne du dispositif amortisseur 4 sur l'échasse 27 garantit notamment une stabilité circonférentielle. Par ailleurs, l'élasticité du premier épaulement 470 et du deuxième épaulement 472 participe également au pré-maintien axial du dispositif amortisseur 4 lors du montage et/ou du fonctionnement. A cet égard, il est possible de prévoir que le premier épaulement 470 et le deuxième épaulement 472 comprennent du polyuréthane, qui autorise une déformation desdits épaulements 470, 472 lors du montage et/ou en fonctionnement.

En complément du deuxième mode de réalisation, la patte de fixation 8 peut alors être reliée au dispositif amortisseur 4 au niveau de l'échancrure 48 séparant les deux épaulements 47. Dans ce cas, comme visible sur la figure 4c, l'échancrure 48 peut comprendre une troisième plaquette sacrificielle 480 sur laquelle la patte de fixation 8 est en appui, assurant des fonctions équivalentes à celles de la première plaquette sacrificielle 40, et présentant les mêmes caractéristiques, notamment en ce qui concerne la composition, la lubrification et les revêtements additionnels.

Différents modes de réalisation de l'ensemble 1 selon l'invention ont été décrits dans le cas où le premier module rotor 2 est une soufflante, et le deuxième module rotor 3 est un compresseur basse pression.

Ceci n'est cependant pas limitatif, puisque le premier module rotor 2 peut également être un premier étage de compresseur, haute ou basse pression, et le deuxième module rotor 3 un deuxième étage dudit compresseur, successif au premier étage de compresseur, en amont ou en aval de ce-dernier. Alternativement, le premier module rotor 2 est un premier étage de turbine, haute ou basse pression, et le deuxième module rotor 3 un deuxième étage de ladite turbine, successif au premier étage de turbine, en amont ou en aval de ce-dernier.

## Revendications

1. Ensemble (1) pour turbomachine comprenant :
• un premier module rotor (2) comprenant un disque (21) centré sur un axe longitudinal (X-X) de turbomachine, une première aube (20) montée à la périphérie externe du disque (21) duquel elle s'étend, la première aube (20) comprenant une pale (23), une plateforme (25), une échasse (27) et un pied (29) encastré dans un logement (210) du disque (21),
• un deuxième module rotor (3), relié au premier module rotor (2), et comprenant :
∘ une deuxième aube (30) de longueur inférieure à la première aube (20), et
∘ une virole (32) comprenant une extension circonférentielle (34) s'étendant vers la plateforme (25) de la première aube (20), et
• un dispositif amortisseur (4) comprenant une première surface radiale externe (41) en appui avec frottement contre le premier module (2), sur une surface interne (250) de la plateforme (25) de la première aube (20), ainsi qu'une deuxième surface radiale externe (42) en appui avec frottement contre le deuxième module (3), contre l'extension circonférentielle (34) de la virole (32), de sorte à coupler les modules (2, 3) en vue d'amortir leurs mouvements vibratoires respectifs en fonctionnement, le dispositif amortisseur (4) comprenant en outre deux épaulements (47) de part et d'autre d'une échancrure (48) ménagée au niveau d'une surface interne (49) du dispositif amortisseur (4),
**caractérisé en ce que** les épaulements (47) sont en appui contre l'échasse (27).

2. Ensemble (1) selon la revendication 1, dans lequel le dispositif amortisseur (4) comprend une première plaquette sacrificielle (40) logée au niveau de la première (41) et de la deuxième (42) surface radiale externe, la première plaquette (40) étant configurée pour garantir l'appui desdites surfaces radiales externes (41, 42).

3. Ensemble (1) selon la revendication 2, dans lequel la première plaquette (40) comprend un revêtement (44) configuré pour diminuer le frottement entre ladite première plaquette (40) et les modules rotor (2, 3).

4. Ensemble (1) selon la revendication 2, dans lequel la première plaquette (40) comprend un revêtement (44) de type viscoélastique.

5. Ensemble (1) selon l'une des revendications 1 à 4, dans lequel le dispositif amortisseur (4) comprend des alésages (45) configurés pour alléger la masse du dispositif amortisseur (4).

6. Ensemble (1) selon l'une des revendications 1 à 5, dans lequel le dispositif amortisseur (4) comprend des inserts (46), par exemple de type métallique, configurés pour alourdir le dispositif amortisseur (4).

7. Ensemble (1) selon l'une des revendications 1 à 6, dans lequel les épaulements (47) sont en outre en appui contre la virole (32).

8. Ensemble (1) selon l'une des revendications 1 à 7, dans lequel les épaulements (47) s'étendent de part et d'autre de l'échasse (27) dans une direction circonférentielle.

9. Ensemble (1) selon l'une des revendications 1 à 8, comprenant en outre une patte de fixation (8) reliée d'une part au dispositif amortisseur (4), et d'autre part à la liaison entre le premier (2) et le deuxième module rotor (3), de sorte à assurer l'anti rotation, ainsi que l'arrêt axial et radial du dispositif amortisseur (4).

10. Ensemble (1) selon la revendication 9, dans lequel la patte de fixation (8) comprend une deuxième plaquette sacrificielle (80) logée au niveau d'une surface externe (81) de la patte de fixation (8), la deuxième plaquette (80) étant configurée pour augmenter la raideur tangentielle du dispositif amortisseur (4).

11. Ensemble (1) selon l'une des revendications 9 et 10, dans lequel la patte de fixation (8) est reliée au dispositif amortisseur (4) au niveau de l'échancrure (48).

12. Ensemble (1) selon la revendication 11, dans lequel l'échancrure (48) comprend une troisième plaquette sacrificielle (480) sur laquelle la patte de fixation (8) est en appui.

13. Ensemble (1) selon l'une des revendications 1 à 12, dans lequel le premier module (2) est une soufflante, et le deuxième module (3) est un compresseur basse pression.

14. Turbomachine comprenant un ensemble (1) selon l'une des revendications 1 à 13.

## Patentansprüche

1. Anordnung (1) für eine Turbomaschine, bestehend aus :
• einem ersten Rotormodul (2) mit einer Scheibe (21), die auf einer Längsachse (X-X) der Turbomaschine zentriert ist, einer ersten Schaufel (20), die am äußeren Umfang der Scheibe (21) montiert ist, von der sie sich erstreckt, wobei die erste Schaufel (20) ein Blatt (23), eine Plattform (25), eine Stelze (27) und einen Fuß (29) aufweist, der in eine Aufnahme (210) der Scheibe (21) eingelassen ist,
• einem zweiten Rotormodul (3), das mit dem ersten Rotormodul (2) verbunden ist und umfasst:
∘ eine zweite Schaufel (30), deren Länge geringer ist als die der ersten Schaufel (20), und
∘ einen Ring (32) mit einer Umfangserweiterung (34), die sich in Richtung der Plattform (25) der ersten Schaufel (20) erstreckt, und
• eine Dämpfungsvorrichtung (4) mit einer ersten radialen Außenfläche (41), die reibend an dem ersten Rotormodul (2) an einer Innenfläche (250) der Plattform (25) der ersten Schaufel (20) anliegt, sowie mit einer zweiten radialen Außenfläche (42), die reibend an dem zweiten Modul (3) anliegt, gegen die Umfangserstreckung (34) des Rings (32), so dass die Module (2, 3) gekoppelt werden, um ihre jeweiligen Vibrationsbewegungen im Betrieb zu dämpfen, wobei die Dämpfungsvorrichtung (4) außerdem zwei Schultern (47) auf beiden Seiten einer Aussparung (48) umfasst, die auf der Höhe einer Innenfläche (49) der Dämpfungsvorrichtung (4) ausgebildet ist, **dadurch gekennzeichnet, dass** die Schultern (47) an der Stelze (27) anliegen.

2. Anordnung (1) nach Anspruch 1, wobei die Dämpfungsvorrichtung (4) eine erste Opferplatte (40) umfasst, das an der ersten (41) und der zweiten (42) radialen Außenfläche aufgenommen ist, wobei die erste Opferplatte (40) so konfiguriert ist, dass es die Auflage der radialen Außenflächen (41, 42) gewährleistet.

3. Anordnung (1) nach Anspruch 2, wobei die erste Opferplatte (40) eine Beschichtung (44) umfasst, die so konfiguriert ist, dass sie die Reibung zwischen der ersten Opferplatte (40) und den Rotormodulen (2, 3) verringert.

4. Anordnung (1) nach Anspruch 2, wobei die erste Opferplatte (40) eine Beschichtung (44) vom viskoelastischen Typ umfasst.

5. Anordnung (1) nach einem der Ansprüche 1 bis 4, wobei die Dämpfungsvorrichtung (4) Bohrungen (45) umfasst, die so gestaltet sind, dass sie die Masse der Dämpfungsvorrichtung (4) verringern.

6. Anordnung (1) nach einem der Ansprüche 1 bis 5, wobei die Dämpfungsvorrichtung (4) Einsätze (46), z. B. metallischer Art, umfasst, die so gestaltet sind, dass sie die Dämpfungsvorrichtung (4) beschweren.

7. Anordnung (1) nach einem der Ansprüche 1 bis 6, bei der die Schultern (47) zusätzlich an der Hülse (32) anliegen.

8. Anordnung (1) nach einem der Ansprüche 1 bis 7, wobei sich die Schultern (47) auf beiden Seiten der Stelze (27) in einer Umfangsrichtung erstrecken.

9. Anordnung (1) nach einem der Ansprüche 1 bis 8, die außerdem eine Befestigungslasche (8) umfasst, die einerseits mit der Dämpfungsvorrichtung (4) und andererseits mit der Verbindung zwischen dem ersten (2) und dem zweiten Rotormodul (3) verbunden ist, so dass die Rotationsverhinderung sowie die axiale und radiale Arretierung der Dämpfungsvorrichtung (4) gewährleistet sind.

10. Anordnung (1) nach Anspruch 9, wobei die Befestigungslasche (8) ein zweites Opferplättchen (80) umfasst, das an einer Außenfläche (81) der Befestigungslasche (8) aufgenommen ist, wobei das zweite Opferplättchen (80) so konfiguriert ist, dass es die Tangentialsteifigkeit der Dämpfungsvorrichtung (4) erhöht.

11. Anordnung (1) nach einem der Ansprüche 9 oder 10, wobei die Befestigungslasche (8) an der Aussparung (48) mit der Dämpfungsvorrichtung (4) verbunden ist.

12. Anordnung (1) nach Anspruch 11, wobei die Aussparung (48) ein drittes Opferplättchen (480) umfasst, an dem die Befestigungslasche (8) anliegt.

13. Anordnung (1) nach einem der Ansprüche 1 bis 12, wobei das erste Modul (2) ein Gebläse ist und das zweite Modul (3) ein Niederdruckkompressor ist.

14. Turbomaschine mit einer Anordnung (1) nach einem der Ansprüche 1 bis 13.

## Claims

1. A turbomachine assembly (1) comprising:
• a first rotor module (2) comprising a disk (21) centered on a turbomachine longitudinal axis (X-X), a first blade (20) mounted on the external periphery of the disk (21) from which it extends, the first blade (20) comprising an airfoil (23), a platform (25), a support (27) and a root (29) embedded in a recess (210) of the disk (21),
• a second rotor module (3), connected to the first rotor module (2), and comprising
∘ a second blade (30) with a smaller length than the first blade (20), and
∘ a ferrule (32) comprising a circumferential extension (34) extending toward the platform (25) of the first blade (20), and
• a damping device (4) comprising a first radial external surface (41) supported with friction against the first module (2), on an internal surface (250) of the platform (25) of the first blade (20), as well as a second radial external surface (42) supported with friction against the second module (3), against the circumferential extension (34) of the ferrule (32), so as to couple the modules (2, 3) for the purpose of damping their respective vibrational movements during operation, the damping device (4) also comprising two shoulders (47) on either side of a notch (48) provided at an internal surface (49) of the damping device (4), **characterized in that** the shoulders (47) are supported against the ferrule (32).

2. The assembly (1) according to claim 1, wherein the damping device (4) comprises a first sacrificial plate (40) housed at the first (41) and the second (42) radial external surface, the first plate (40) being configured to guarantee the support of said radial external surfaces (41,42).

3. The assembly (1) according to claim 2, wherein the first plate (40) comprises a coating (44) configured to reduce friction between said first plate (40) and the rotor modules (2, 3).

4. The assembly (1) according to claim 2, wherein the first plate (40) comprises a coating (44) of the viscoelastic type.

5. The assembly (1) according to one of claims 1 to 4, wherein the damping device (4) comprises bores (45) configured to lighten the mass of the damping device (4).

6. The assembly (1) according to one of claims 1 to 5, wherein the damping device (4) comprises inserts (46), of the metallic type for example, configured to add weight to the damping device (4).

7. The assembly (1) according to one of claims 1 to 6, wherein the shoulders (47) are further supported against the support (27).

8. The assembly (1) according to one of claims 1 to 7, wherein the shoulders (47) extend on either side of the support (27) in a circumferential direction.

9. The assembly (1) according to one of claims 1 to 8, also comprising an attachment tab (8) connected on the one hand to the damping device (4), and on the other hand to the connection between the first (2) and the second rotor modules (3), so as to provide anti-rotation, as well as the axial and radial retention of the damping device (4).

10. The assembly (1) according to claim 9, wherein the attachment tab (8) comprises a second sacrificial plate (80) housed at an external surface (81) of the attachment tab (8), the second plate (80) being configured to increase the tangential stiffness of the damping device (4).

11. The assembly (1) according to one of claims 9 and 10, wherein the attachment tab (8) is connected to the damping device (4) at the notch (48).

12. The assembly (1) according to claim 11, wherein the notch (48) comprises a third sacrificial plate (480) on which the attachment tab (8) is supported.

13. The assembly (1) according to one of claims 1 to 12, wherein the first module (2) is a fan, and the second module (3) is a low-pressure compressor.

14. A turbomachine comprising an assembly (1) according to one of claims 1 to 13.
